(19) Europäisches Patentamt
European Patent Office
Office européen des brevets

(11) EP 3 883 036 A1

(12) EUROPEAN PATENT APPLICATION
published in accordance with Art. 153(4) EPC

(43) Date of publication:
**22.09.2021 Bulletin 2021/38**

(21) Application number: **19904879.4**

(22) Date of filing: **20.12.2019**

(51) Int Cl.:
***H01M 10/0567*** (2010.01) ***H01M 10/0568*** (2010.01)
***H01M 10/42*** (2006.01) ***H01M 10/052*** (2010.01)

(86) International application number:
**PCT/KR2019/018213**

(87) International publication number:
**WO 2020/138865 (02.07.2020 Gazette 2020/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.12.2018 KR 20180169582**
**19.12.2019 KR 20190170678**

(71) Applicant: **LG ENERGY SOLUTION, LTD.**
**Seoul 07335 (KR)**

(72) Inventors:
- **KIM, Shul Kee**
  **Daejeon 34122 (KR)**
- **LIM, Young Min**
  **Daejeon 34122 (KR)**
- **KIM, Ha Eun**
  **Daejeon 34122 (KR)**

(74) Representative: **Hoffmann Eitle**
**Patent- und Rechtsanwälte PartmbB**
**Arabellastraße 30**
**81925 München (DE)**

# (54) ELECTROLYTE FOR LITHIUM SECONDARY BATTERY AND LITHIUM SECONDARY BATTERY COMPRISING SAME

(57) The present invention provides an electrolyte solution for a lithium secondary battery, which includes a first lithium salt, a second lithium salt, an organic solvent, and an additive including a compound represented by Formula 1, wherein the first lithium salt is an imide lithium salt, and a lithium secondary battery including the same.

EP 3 883 036 A1

## Description

## TECHNICAL FIELD

### Cross-reference to Related Applications

This application claims priority from Korean Patent Application Nos. 2018-0169582, filed on December 26, 2018, and 2019-0170678, filed on December 19, 2019, the disclosures of which are incorporated by reference herein.

### Technical Field

The present invention relates to an electrolyte solution for a lithium secondary battery, which may improve high-temperature capacity retention and high-temperature safety, and a lithium secondary battery including the same.

## BACKGROUND ART

As the miniaturization and weight reduction of electronic devices are realized and the use of portable electronic devices is common, research into secondary batteries having high energy density, as power sources of these devices, has been actively conducted.

The secondary battery includes a nickel-cadmium battery, a nickel-metal hydride battery, a nickel-hydrogen battery, and a lithium secondary battery, and, among these batteries, research into lithium secondary batteries, which not only exhibit a discharge voltage two times or more higher than a typical battery using an aqueous alkaline solution, but also have high energy density per unit weight and are rapidly chargeable, has been emerged.

A lithium metal oxide is being used as a positive electrode active material of the lithium secondary battery, and lithium metal, a lithium alloy, crystalline or amorphous carbon, or a carbon composite is being used as a negative electrode active material. A current collector is coated with each active material of appropriate thickness and length or the active material itself is coated in the form of a film, the resultant product is wound or stacked with an insulating separator and then put into a container, and an electrolyte solution is injected thereinto to prepare a lithium secondary battery.

Charge and discharge of the lithium secondary battery is performed while a process of intercalating and deintercalating lithium ions dissolved from a lithium metal oxide positive electrode into and out of a negative electrode is repeated. In this case, since the lithium ions are highly reactive, the lithium ions react with the carbon negative electrode to form $Li_2CO_3$, LiO, or LiOH, and thus, a film is formed on a surface of the negative electrode. The film is referred to as "solid electrolyte interface (SEI)", wherein the SEI formed at an initial stage of charging may suppress a reaction of the lithium ions with the negative electrode or other materials during charge and discharge to prevent damage of the negative electrode under high-temperature conditions and act as an ion tunnel that only passes the lithium ions.

Thus, in order to improve high-temperature cycle characteristics of the lithium secondary battery, there is a need to develop an electrolyte solution capable of forming a robust SEI on the negative electrode of the lithium secondary battery.

Prior Art Document: Japanese Patent Application Laid-open Publication No. 2003-007331

## DISCLOSURE OF THE INVENTION

## TECHNICAL PROBLEM

An aspect of the present invention provides an electrolyte solution for a lithium secondary battery which may form a stable SEI on a negative electrode of the lithium secondary battery by including an imide lithium salt and a compound simultaneously having a sulfonate group and a cyclic carbonate group.

Another aspect of the present invention provides a lithium secondary battery in which high-temperature capacity characteristics and high-temperature safety are improved by suppressing a side reaction between a positive electrode and the electrolyte solution by including the electrolyte solution for a lithium secondary battery.

## TECHNICAL SOLUTION

According to an aspect of the present invention, there is provided an electrolyte solution for a lithium secondary battery which includes: a first lithium salt; a second lithium salt; an organic solvent; and an additive including a compound represented by Formula 1, wherein the first lithium salt is an imide lithium salt.

[Formula 1]

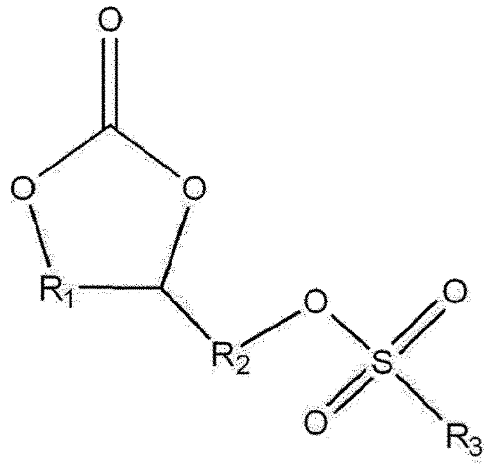

In Formula 1, $R_1$ and $R_2$ are each independently an alkylene group having 1 to 6 carbon atoms, and $R_3$ is selected from the group consisting of hydrogen, a halogen-substituted or unsubstituted alkyl group having 1 to 20 carbon atoms, a cyclic alkyl group having 3 to 8 carbon atoms, an alkenyl group having 2 to 8 carbon atoms, and an aromatic hydrocarbon group having 5 to 14 carbon atoms.

According to another aspect of the present invention, there is provided a lithium secondary battery including a positive electrode; a negative electrode; a separator; and the electrolyte solution for a lithium secondary battery of the present invention.

## ADVANTAGEOUS EFFECTS

Since an electrolyte solution for a lithium secondary battery of the present invention includes two types or more of lithium salts and a compound containing a sulfonate group and a cyclic carbonate group, it may form a stable SEI on a surface of a negative electrode during initial activation and may suppress a side reaction at a positive electrode interface to improve high-temperature capacity characteristics and high-temperature safety of the lithium secondary battery. Thus, when the electrolyte solution for a lithium secondary battery is included, a lithium secondary battery having improved high-temperature capacity characteristics and high-temperature safety may be achieved by suppressing a side reaction, for example, corrosion of an electrode current collector, even under high-temperature and high-voltage conditions.

## MODE FOR CARRYING OUT THE INVENTION

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. In the specification, the terms of a singular form may include plural forms unless referred to the contrary.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

## Electrolyte Solution for Lithium Secondary Battery

According to an embodiment, an electrolyte solution for a lithium secondary battery of the present invention includes: a first lithium salt; a second lithium salt; an organic solvent; and an additive including a compound represented by the following Formula 1, wherein the electrolyte solution for a lithium secondary battery may include an imide lithium salt as the first lithium salt.

[Formula 1]

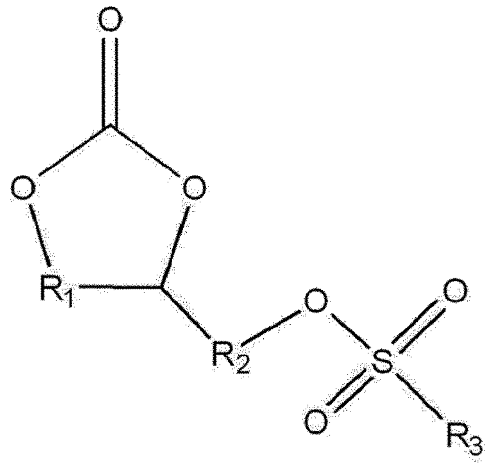

In Formula 1, $R_1$ and $R_2$ are each independently an alkylene group having 1 to 6 carbon atoms, and $R_3$ is selected from the group consisting of hydrogen, a halogen-substituted or unsubstituted alkyl group having 1 to 20 carbon atoms, a cyclic alkyl group having 3 to 8 carbon atoms, an alkenyl group having 2 to 8 carbon atoms, and an aromatic hydrocarbon group having 5 to 14 carbon atoms.

**(1) Lithium Salt**

First, a first lithium salt and a second lithium salt will be described.

The lithium salt is used to provide lithium ions, wherein, generally, it is used without limitation as long as it is a compound capable of providing lithium ions in a lithium secondary battery.

However, with respect to the present invention, two types or more of the lithium salts are used, and, among them, the first lithium salt is an imide lithium salt, wherein the imide lithium salt is essentially included among the lithium salts. The reason for this is that a stable solid electrolyte interface (SEI) may be formed on a negative electrode when the imide lithium salt is used together with an additive including a compound represented by Formula 1 which will be described later, and a stable film may also be formed on a surface of a positive electrode to control a side reaction caused by electrolyte solution decomposition at high temperatures.

For example, at least one selected from the group consisting of $LiN(FSO_2)_2$, LiSCN, $LiN(CN)_2$, $LiN(CF_3SO_2)_2$, and $LiN(CF_3CF_2SO_2)_2$ may be used as the first lithium salt.

However, since corrosion of a current collector is accelerated under high-temperature and high-voltage conditions when the imide lithium salt is only used, battery performance may rather be degraded. Thus, it is necessary to mix and use a different type of the lithium salt other than the imide lithium salt.

In this case, a compound capable of providing lithium ions may be used without limitation as the second lithium salt, and, specifically, at least one selected from the group consisting of $LiPF_6$, LiF, LiCl, LiBr, LiI, $LiNO_3$, $LiN(CN)_2$, $LiBF_4$, $LiClO_4$, $LiAlO_4$, $LiAlCl_4$, $LiSbF_6$, $LiAsF_6$, $LiBF_2C_2O_4$, $LiBC_4O_8$, $Li(CF_3)_2PF_4$, $Li(CF_3)_3PF_3$, $Li(CF_3)_4PF_2$, $Li(CF_3)_5PF$, $Li(CF_3)_6P$, $LiCF_3SO_3$, $LiC_4F_9SO_3$, $LiCF_3CF_2SO_3$, $LiCF_3CF_2(CF_3)_2CO$, $Li(CF_3SO_2)_2CH$, $LiCF_3(CF_2)_7SO_3$, $LiCF_3CO_2$, $LiCH_3CO_2$, and LiSCN may be used.

The first lithium salt and the second lithium salt may be included in a molar ratio of 1:1 to 7:1, preferably 1:1 to 6:1, and more preferably 1:1 to 4:1. In a case in which the first and second lithium salts are mixed in the above molar ratio, a film capable of suppressing a current collector corrosion phenomenon while suppressing an electrolyte solution side reaction may be stably formed.

**(2) Organic Solvent**

Next, the organic solvent will be described.

In the present invention, the organic solvent is a solvent commonly used in a lithium secondary battery, wherein, for example, an ether compound, an ester compound (acetates and propionates), an amide compound, a linear carbonate or cyclic carbonate compound, or a nitrile compound may be used alone or in mixture of two or more thereof.

Among the listed compounds, linear carbonate and cyclic carbonate may preferably be mixed and used as the organic solvent. In a case in which the linear carbonate and the cyclic carbonate are mixed and used as the organic

solvent, dissociation and movement of the lithium salt may be performed smoothly. In this case, the cyclic carbonate-based compound and the linear carbonate-based compound may be mixed in a volume ratio of 1:9 to 6:4, preferably 1:9 to 4:6, and more preferably 2:8 to 4:6.

Specific examples of the linear carbonate compound may be a compound selected from the group consisting of dimethyl carbonate (DMC), diethyl carbonate (DEC), dipropyl carbonate (DPC), ethylmethyl carbonate (EMC), methylpropyl carbonate (MPC), and ethylpropyl carbonate (EPC), or a mixture of two or more thereof, but the present invention is not limited thereto.

Also, specific examples of the cyclic carbonate compound may be a compound selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, and halides thereof, or a mixture of two or more thereof.

**(3) Additive**

Next, the additive including the compound represented by the following Formula 1 will be described.

[Formula 1]

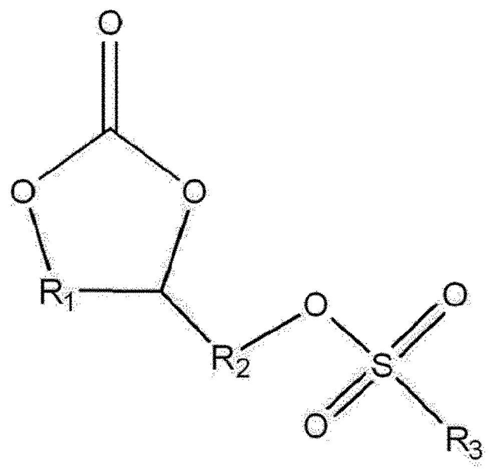

In Formula 1, $R_1$ and $R_2$ are each independently an alkylene group having 1 to 6 carbon atoms, and $R_3$ may be selected from the group consisting of hydrogen, a halogen-substituted or unsubstituted alkyl group having 1 to 20 carbon atoms, a cyclic alkyl group having 3 to 8 carbon atoms, an alkenyl group having 2 to 8 carbon atoms, and an aromatic hydrocarbon group having 5 to 14 carbon atoms.

Recently, as the application fields of the lithium secondary battery have been expanded, diverse research to improve capacity characteristics and battery safety performance at high temperatures has been conducted. Particularly, high-temperature performance of the lithium secondary battery may largely depend on characteristics of the solid electrolyte interface (SEI) formed by an initial activation reaction (formation) between the negative electrode and the electrolyte solution. Also, appropriate control of reactivity between the electrolyte solution and the positive electrode under high-temperature conditions also corresponds to one factor that affects the high-temperature performance.

Thus, in the electrolyte solution for a lithium secondary battery according to the present invention, the additive includes the compound represented by Formula 1, which simultaneously contains a sulfonate group and a cyclic carbonate group, so as to improve the high-temperature battery performance.

During the lithium secondary battery is subjected to an activation process, the compound represented by Formula 1 is decomposed into a compound containing a carbonate group and a compound containing a sulfonate group by electrons provided from the negative electrode, and these decomposition products and anions of the imide lithium salt form a robust SEI on the negative electrode by a reduction reaction. When the SEI is stably formed on the negative electrode, the SEI does not easily collapse even under high-temperature conditions, and thus, the high-temperature battery performance may be improved.

Furthermore, since the compound containing a sulfonate group, which has been decomposed from the compound represented by Formula 1, forms a CEI (cathode electrolyte interphase), as a positive electrode electrolyte solution film, on the positive electrode interface through adsorption and reaction to suppress a side reaction between the positive electrode and the electrolyte solution for a lithium secondary battery, the compound containing a sulfonate group may

further improve high-temperature safety.

For example, the compound represented by Formula 1 may include at least one selected from the group consisting of 1,3-dioxolan-2-onylmethyl allyl sulfonate, 1,3-dioxolan-2-onylmethyl methyl sulfonate, 1,3-dioxolan-2-onylmethyl ethyl sulfonate, 1,3-dioxolan-2-onylmethyl propyl sulfonate, 1,3-dioxolan-2-onylmethyl butyl sulfonate, 1,3-dioxolan-2-onylmethyl pentyl sulfonate, 1,3-dioxolan-2-onylmethyl hexyl sulfonate, 1,3-dioxolan-2-onylmethyl cyclopentyl sulfonate, 1,3-dioxolan-2-onylmethyl cyclohexyl sulfonate, 1,3-dioxolan-2-onylmethyl cycloheptyl sulfonate, 1,3-dioxolan-2-onylmethyl trifluoromethyl sulfonate, 1,3-dioxolan-2-onylmethyl trifluoroethyl sulfonate, 1,3-dioxolan-2-onylmethyl benzyl sulfonate, 1,3-dioxolan-2-onylmethyl phenyl sulfonate, 1,3-dioxolan-2-onylmethyl para-chlorophenyl sulfonate, 1,3-dioxolan-2-onylethyl allyl sulfonate, 1,3-dioxolan-2-onylethyl methyl sulfonate, 1,3-dioxolan-2-onylethyl cyclopentyl sulfonate, 1,3-dioxolan-2-onylethyl cyclohexyl sulfonate, 1,3-dioxolan-2-onylethyl trifluoromethyl sulfonate, 1,3-dioxolan-2-onylethyl trifluoroethyl sulfonate, 1,3-dioxolan-2-onylethyl benzyl sulfonate, 1,3-dioxolan-2-onylethyl phenyl sulfonate, 1,3-dioxolan-2-onylethyl para-chlorophenyl sulfonate, 1,3-dioxan-2-onyl-4-methyl allyl sulfonate, 1,3-dioxan-2-onyl-4-methyl methyl sulfonate, 1,3-dioxan-2-onyl-4-methyl cyclopentyl sulfonate, 1,3-dioxan-2-onyl-4-methyl cyclohexyl sulfonate, 1,3-dioxan-2-onyl-4-methyl trifluoromethyl sulfonate, 1,3-dioxan-2-onyl-4-methyl trifluoroethyl sulfonate, 1,3-dioxan-2-onyl-4-methyl benzyl sulfonate, 1,3-dioxan-2-onyl-4-methyl phenyl sulfonate, and 1,3-dioxan-2-onyl-4-methyl para-chlorophenyl sulfonate.

The compound represented by Formula 1 may be included in an amount of 0.01 part by weight to 5 parts by weight, preferably 0.1 part by weight to 5 parts by weight, and more preferably 0.1 part by weight to 3 parts by weight based on 100 parts by weight of the electrolyte solution for a lithium secondary battery. In a case in which the compound represented by Formula 1 is included in an amount within the above range, the compound represented by Formula 1 may prevent an increase in resistance in the battery by forming a film having a predetermined thickness while the compound represented by Formula 1 may stably form a film on the positive electrode and negative electrode interfaces and may suppress the side reaction occurring between the positive electrode and the electrolyte solution.

## Lithium Secondary Battery

Next, a lithium secondary battery according to the present invention will be described.

The lithium secondary battery according to an embodiment of the present invention includes a positive electrode, a negative electrode, a separator, and an electrolyte solution for a lithium secondary battery. Specifically, the lithium secondary battery includes at least one positive electrode, at least one negative electrode, a separator which may be optionally disposed between the positive electrode and the negative electrode, and the electrolyte solution for a lithium secondary battery. In this case, since the electrolyte solution for a lithium secondary battery is the same as described above, a detailed description thereof will be omitted.

### (1) Positive Electrode

The positive electrode may be prepared by coating a positive electrode collector with a positive electrode active material slurry including a positive electrode active material, a binder for an electrode, an electrode conductive agent, and a solvent.

The positive electrode collector is not particularly limited so long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. In this case, the positive electrode collector may have fine surface roughness to improve bonding strength with the positive electrode active material, and the positive electrode collector may be used in various shapes such as a film, a sheet, a foil, a net, a porous body, a foam body, a non-woven fabric body, and the like.

The positive electrode active material is a compound capable of reversibly intercalating and deintercalating lithium, wherein the positive electrode active material may specifically include a lithium composite metal oxide including lithium and at least one metal such as cobalt, manganese, nickel, or aluminum. Specifically, the lithium composite metal oxide may include lithium-manganese-based oxide (e.g., $LiMnO_2$, $LiMn_2O_4$, etc.), lithium-cobalt-based oxide (e.g., $LiCoO_2$, etc.), lithium-nickel-based oxide (e.g., $LiNiO_2$, etc.), lithium-nickel-manganese-based oxide (e.g., $LiNi_{1-Y1}Mn_{Y1}O_2$ (where $0<Y1<1$), $LiMn_{2-Z1}Ni_zO_4$ (where $0<Z1<2$), etc.), lithium-nickel-cobalt-based oxide (e.g., $LiNi_{1-Y2}Co_{Y2}O_2$ (where $0<Y2<1$), lithium-manganese-cobalt-based oxide (e.g., $LiCo_{1-}Y_3Mn_{Y3}O_2$ (where $0<Y3<1$), $LiMn_{2-Z2}Co_{z2}O_4$ (where $0<Z2<2$), etc.), lithium-nickel-manganese-cobalt-based oxide (e.g., $Li (Ni_{p1}Co_{q1}Mn_{r1})O_2$ (where $0<p1<1$, $0<q1<1$, $0<r1<1$, and $p1+q1+r1=1$) or $Li(Ni_{p2}Co_{q2}Mn_{r2})O_4$ (where $0<p2<2$, $0<q2<2$, $0<r2<2$, and $p2+q2+r2=2$), etc.), or lithium-nickel-cobalt-transition metal (M) oxide (e.g., $Li (Ni_{p3}Co_{q3}Mn_{r3}M_{S1})O_2$ (where M is selected from the group consisting of aluminum (Al), iron (Fe), vanadium (V), chromium (Cr), titanium (Ti), tantalum (Ta), magnesium (Mg), and molybdenum (Mo), and p3, q3, r3, and s1 are atomic fractions of each independent elements, wherein $0<p3<1$, $0<q3<1$, $0<r3<1$, $0<S1<1$, and $p3+q3+r3+S1=1$), etc.), and any one thereof or a mixture of two or more thereof may be

included.

Among these materials, in terms of the improvement of capacity characteristics and stability of the battery, the lithium composite metal oxide may include $LiCoO_2$, $LiMnO_2$, $LiNiO_2$, lithium nickel manganese cobalt oxide (e.g., $Li(Ni_{0.6}Mn_{0.2}Co_{0.2})O_2$, $Li(Ni_{0.5}Mn_{0.3}Co_{0.2})O_2$, or $Li(Ni_{0.8}Mn_{0.1}Co_{0.1})O_2$), or lithium nickel cobalt aluminum oxide (e.g., $LiNi_{0.8}Co_{0.15}Al_{0.05}O_2$, etc.), and, in consideration of a significant improvement due to the control of type and content ratio of elements constituting the lithium composite metal oxide, the lithium composite metal oxide may include $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, or $Li(Ni_{0.8}Mn_{0.1}Co_{0.1})O_2$, and any one thereof or a mixture of two or more thereof may be used.

The binder for an electrode is a component that assists in the binding between the positive electrode active material and the electrode conductive agent and in the binding with the current collector. Specifically, the binder may include polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene (PE), polypropylene, an ethylene-propylene-diene terpolymer (EPDM), a sulfonated EPDM, a styrene-butadiene rubber, a fluoro rubber, various copolymers thereof, and the like.

The electrode conductive agent is a component for further improving the conductivity of the positive electrode active material. Any electrode conductive agent may be used without particular limitation so long as it has conductivity without causing adverse chemical changes in the battery, and, for example, a conductive material, such as: graphite; a carbon-based material such as carbon black, acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used. Specific examples of a commercial conductive agent may include acetylene black-based products (Chevron Chemical Company, Denka black (Denka Singapore Private Limited), or Gulf Oil Company), Ketjen black, ethylene carbonate (EC)-based products (Armak Company), Vulcan XC-72 (Cabot Company), and Super P (Timcal Graphite & Carbon).

The solvent may include an organic solvent, such as N-methyl-2-pyrrolidone (NMP), and may be used in an amount such that desirable viscosity is obtained when the positive electrode active material as well as optionally the binder for a positive electrode and the positive electrode conductive agent is included.

### (2) Negative Electrode

Also, the negative electrode, for example, may be prepared by coating a negative electrode collector with a negative electrode active material slurry including a negative electrode active material, a binder for an electrode, an electrode conductive agent, and a solvent. A metal current collector itself may be used as the negative electrode.

The negative electrode collector is not particularly limited so long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, an aluminum-cadmium alloy, or the like may be used. Also, similar to the positive electrode collector, the negative electrode collector may have fine surface roughness to improve bonding strength with the negative electrode active material, and the negative electrode collector may be used in various shapes such as a film, a sheet, a foil, a net, a porous body, a foam body, a non-woven fabric body, and the like.

The negative electrode active material may include at least one negative electrode active material selected from the group consisting of natural graphite, artificial graphite, a carbonaceous material; lithium-containing titanium composite oxide (LTO); metals (Me) such as silicon (Si), tin (Sn), lithium (Li), zinc (Zn), Mg, cadmium (Cd), cerium (Ce), nickel (Ni), or Fe; alloys composed of the metals (Me); oxides (MeOx) of the metals (Me); and composites of the metals (Me) and carbon.

Since the binder for an electrode, the electrode conductive agent, and the solvent are the same as described above, detailed descriptions thereof will be omitted.

### (3) Separator

A typical porous polymer film used as a typical separator, for example, a porous polymer film prepared from a polyolefin-based polymer, such as an ethylene homopolymer, a propylene homopolymer, an ethylene-butene copolymer, an ethylene-hexene copolymer, and an ethylene-methacrylate copolymer, may be used alone or in a lamination therewith as the separator, and a typical porous nonwoven fabric, for example, a nonwoven fabric formed of high melting point glass fibers or polyethylene terephthalate fibers may be used, but the present invention is not limited thereto.

Hereinafter, the present invention will be described in detail, according to specific examples. However, the following examples are merely presented to exemplify the present invention, and the scope of the present invention is not limited thereto. It will be apparent to those skilled in the art that various modifications and alterations are possible

within the scope and technical spirit of the present invention. Such modifications and alterations fall within the scope of claims included herein.

**[Examples]**

## 1. Example 1

### (1) Preparation of Electrolyte Solution for Lithium Secondary Battery

A non-aqueous organic solvent was prepared by mixing ethylene carbonate (EC) and ethyl methyl carbonate (EMC) at a volume ratio of 30:70 and then dissolving $LiPF_6$ (lithium hexafluorophosphate) and $LiN(FSO_2)_2$ (lithium bis(fluorosulfonyl) imide, LiFSI) such that concentrations of the $LiPF_6$ and the $LiN(FSO_2)_2$ were 0.2 M and 0.8 M, respectively. 1 g of 1,3-dioxolan-2-onylmethyl allyl sulfonate, as an additive, was added to 99 g of the non-aqueous organic solvent to prepare an electrolyte solution for a lithium secondary battery.

### (2) lithium Secondary Battery Preparation

A positive electrode active material ($LiNi_{0.6}Co_{0.2}Mn_{0.2}O_2$; NCM622), carbon black as a conductive agent, and polyvinylidene fluoride (PVDF), as a binder, were mixed in a weight ratio of 94:3:3 and then added to N-methyl-2-pyrrolidone (NMP), as a solvent, to prepare a positive electrode active material slurry. An about 20 $\mu$m thick aluminum (Al) thin film, as a positive electrode collector, was coated with the positive electrode active material slurry, dried, and roll-pressed to prepare a positive electrode.

Graphite as a negative electrode active material, polyvinylidene fluoride (PVDF) as a binder, and carbon black, as a conductive agent, were mixed in a weight ratio of 95:2:3 and then added to N-methyl-2-pyrrolidone (NMP), as a solvent, to prepare a negative electrode active material slurry. A 10 $\mu$m thick copper (Cu) thin film, as a negative electrode collector, was coated with the negative electrode active material slurry, dried, and roll-pressed to prepare a negative electrode.

The positive electrode, the negative electrode, and a separator formed of polypropylene/polyethylene/polypropylene (PP/PE/PP) were sequentially stacked in the order of the positive electrode/separator/negative electrode, and, after the stack was placed in a pouch-type battery case, the electrolyte solution for a lithium secondary battery was injected thereinto to prepare a lithium secondary battery.

## 2. Example 2

An electrolyte solution for a lithium secondary battery and a lithium secondary battery were prepared in the same manner as in Example 1 except that 3 g of 1,3-dioxolan-2-onylmethyl allyl sulfonate, as an additive, was added to 97 g of the non-aqueous organic solvent.

## 3. Example 3

An electrolyte solution for a lithium secondary battery and a lithium secondary battery were prepared in the same manner as in Example 1 except that, after mixing ethylene carbonate (EC) and ethyl methyl carbonate (EMC) at a volume ratio of 30:70, $LiPF_6$ and $LiN(FSO_2)_2$ (LIFSI) were dissolved such that concentrations of the $LiPF_6$ and the $LiN(FSO_2)_2$ were 0.2 M and 1.0 M, respectively.

## 4. Example 4

An electrolyte solution for a lithium secondary battery and a lithium secondary battery were prepared in the same manner as in Example 1 except that, after mixing ethylene carbonate (EC) and ethyl methyl carbonate (EMC) at a volume ratio of 30:70, $LiPF_6$ and $LiN(FSO_2)_2$ (LIFSI) were dissolved such that concentrations of the $LiPF_6$ and the $LiN(FSO_2)_2$ were 0.4 M and 0.8 M, respectively.

## 5. Example 5

An electrolyte solution for a lithium secondary battery and a lithium secondary battery were prepared in the same manner as in Example 1 except that, after mixing ethylene carbonate (EC) and ethyl methyl carbonate (EMC) at a volume ratio of 30:70, $LiPF_6$ and LIFSI were dissolved such that concentrations of the $LiPF_6$ and the LIFSI were 0.2 M and 1.2 M, respectively.

**6. Example 6**

An electrolyte solution for a lithium secondary battery and a lithium secondary battery were prepared in the same manner as in Example 1 except that 7 g of 1,3-dioxolan-2-onylmethyl allyl sulfonate, as an additive, was added to 93 g of the non-aqueous organic solvent.

**7. Example 7**

An electrolyte solution for a lithium secondary battery and a lithium secondary battery were prepared in the same manner as in Example 1 except that ethylene carbonate (EC) and ethyl methyl carbonate (EMC) were mixed at a volume ratio of 20:80.

**8. Example 8**

An electrolyte solution for a lithium secondary battery and a lithium secondary battery were prepared in the same manner as in Example 1 except that, after mixing ethylene carbonate (EC) and ethyl methyl carbonate (EMC) at a volume ratio of 30:70, $LiPF_6$ and LIFSI were dissolved such that concentrations of the $LiPF_6$ and the LIFSI were 0.8 M and 0.7 M, respectively.

**[Comparative Examples]**

**1. Comparative Example 1**

An electrolyte solution for a lithium secondary battery and a lithium secondary battery were prepared in the same manner as in Example 1 except that $LiN(FSO_2)_2$ (lithium bis(fluorosulfonyl)imide, LiFSI), as the first lithium salt, was not used and $LiPF_6$ (lithium hexafluorophosphate), as the second lithium salt, was only dissolved such that a concentration of the $LiPF_6$ was 1.0 M when the electrolyte solution for a lithium secondary battery was prepared.

**2. Comparative Example 2**

An electrolyte solution for a lithium secondary battery and a lithium secondary battery were prepared in the same manner as in Example 1 except that $LiPF_6$ (lithium hexafluorophosphate), as the second lithium salt, was not used and $LiN(FSO_2)_2$ (lithium bis(fluorosulfonyl)imide, LiFSI), as the first lithium salt, was only dissolved such that a concentration of the $LiN(FSO_2)_2$ was 1 M when the electrolyte solution for a lithium secondary battery was prepared.

**3. Comparative Example 3**

An electrolyte solution for a lithium secondary battery and a lithium secondary battery were prepared in the same manner as in Example 1 except that 1,3-dioxolan-2-onylmethyl allyl sulfonate was not used as an additive when the electrolyte solution for a lithium secondary battery was prepared.

**4. Comparative Example 4**

An electrolyte solution for a lithium secondary battery and a lithium secondary battery were prepared in the same manner as in Example 1 except that 1 g of vinylene carbonate, instead of 1 g of 1,3-dioxolan-2-onylmethyl allyl sulfonate, was added as an additive when the electrolyte solution for a lithium secondary battery was prepared.

**5. Comparative Example 5**

An electrolyte solution for a lithium secondary battery and a lithium secondary battery were prepared in the same manner as in Comparative Example 3 except that $LiPF_6$ (lithium hexafluorophosphate) and $LiN(FSO_2)_2$ (lithium bis(fluorosulfonyl)imide, LiFSI) were dissolved such that concentrations of the $LiPF_6$ and the $LiN(FSO_2)_2$ were 0.6 M and 0.4 M, respectively.

**6. Comparative Example 6**

An electrolyte solution for a lithium secondary battery and a lithium secondary battery were prepared in the same manner as in Comparative Example 1 except that 1,3-dioxolan-2-onylmethyl allyl sulfonate was not used as an

additive when the electrolyte solution for a lithium secondary battery was prepared.

## 7. Comparative Example 7

An electrolyte solution for a lithium secondary battery and a lithium secondary battery were prepared in the same manner as in Comparative Example 2 except that 1,3-dioxolan-2-onylmethyl allyl sulfonate was not used as an additive when the electrolyte solution for a lithium secondary battery was prepared.

## 8. Comparative Example 8

An electrolyte solution for a lithium secondary battery and a lithium secondary battery were prepared in the same manner as in Example 1 except that, after mixing ethylene carbonate (EC) and ethyl methyl carbonate (EMC) at a volume ratio of 30:70, $LiPF_6$ and $LiBF_4$ were dissolved such that concentrations of the $LiPF_6$ and the $LiBF_4$ were 0.6 M and 0.4 M, respectively.

Solvent volume ratios and additive amounts of the electrolyte solutions for a lithium secondary battery, which were prepared according to the examples and the comparative examples, are presented in Table 1 below.

[Table 1]

| | Solvent volume ratio (v/v) | | Lithium salt amount (M) | | | Additive amount (g) |
|---|---|---|---|---|---|---|
| | EC | EMC | $LiPF_6$ | LiFSI | $LiBF_4$ | 1,3-dioxolan-2-onylmethyl allyl sulfonate |
| Example 1 | 3 | 7 | 0.2 | 0.8 | - | 1 |
| Example 2 | 3 | 7 | 0.2 | 0.8 | - | 3 |
| Example 3 | 3 | 7 | 0.2 | 1.0 | - | 1 |
| Example 4 | 3 | 7 | 0.4 | 0.8 | - | 1 |
| Example 5 | 3 | 7 | 0.2 | 1.2 | - | 1 |
| Example 6 | 3 | 7 | 0.2 | 0.8 | - | 7 |
| Example 7 | 2 | 8 | 0.2 | 0.8 | - | 1 |
| Example 8 | 3 | 7 | 0.8 | 0.7 | - | 1 |
| Comparative Example 1 | 3 | 7 | 1 | 0 | - | 1 |
| Comparative Example 2 | 3 | 7 | 0 | 1 | - | 1 |
| Comparative Example 3 | 3 | 7 | 0.2 | 0.8 | - | 0 |
| Comparative Example 4 | 3 | 7 | 0.2 | 0.8 | - | Use vinylene carbonate (1g) instead of 1,3-dioxolan-2-onylmethyl allyl sulfonate |
| Comparative Example 5 | 3 | 7 | 0.6 | 0.4 | - | 0 |
| Comparative Example 6 | 3 | 7 | 1 | 0 | - | 0 |
| Comparative Example 7 | 3 | 7 | 0 | 1 | | 0 |
| Comparative Example 8 | 3 | 7 | 0.6 | - | 0.4 | 1 |

**[Experimental Examples]**

**1. Experimental Example 1: High-temperature Safety Evaluation (High-temperature Storage Characteristics Evaluation)**

The lithium secondary batteries of Examples 1 to 8 and Comparative Examples 1, 2, and 5 to 8 were charged at 0.33 C/4.25 V to 4.25 V/0.05 C mA under a constant current/constant voltage (CC/CV) condition at room temperature and discharged at a constant current (CC) of 0.33 C to a voltage of 3 V to measure initial discharge capacity.

Thereafter, after each lithium secondary battery was charged at 0.33 C/4.25 V to 4.25 V/0.05 C mA under a constant current/constant voltage (CC/CV) condition at room temperature, charged to a state of charge (SOC) of 100%, and then stored at a high temperature (60°C) for 28 days, each lithium secondary battery was charged at 0.33 C/4.25 V to 4.25 V/0.05 C mA under a constant current/constant voltage (CC/CV) condition at room temperature and discharged at a constant current (CC) of 0.33 C to a voltage of 3 V to measure discharge capacity. The discharge capacity in this case was defined as final discharge capacity after high-temperature storage. Capacity retentions (%), which were calculated by substituting measured values of the initial discharge capacity and the final discharge capacity into Equation 1 below, are presented in Table 2.

[Equation 1]

Capacity retention (%) = final discharge capacity (mAh)/initial discharge capacity (mAh)

[Table 2]

| | Initial discharge capacity (mAh) | Final discharge capacity (mAh) | Capacity retention (%) |
|---|---|---|---|
| Example 1 | 1.062 | 0.988 | 93.0 |
| Example 2 | 1.061 | 0.987 | 93.0 |
| Example 3 | 1.064 | 0.992 | 93.2 |
| Example 4 | 1.061 | 0.983 | 92.6 |
| Example 5 | 1.064 | 0.981 | 92.2 |
| Example 6 | 1.051 | 0.935 | 89.0 |
| Example 7 | 1.058 | 0.986 | 93.2 |
| Example 8 | 1.056 | 0.941 | 89.1 |
| Comparative Example 1 | 1.058 | 0.935 | 88.4 |
| Comparative Example 2 | 1.063 | 0.898 | 84.5 |
| Comparative Example 5 | 1.052 | 0.921 | 87.5 |
| Comparative Example 6 | 1.057 | 0.923 | 87.3 |
| Comparative Example 7 | 1.065 | 0.842 | 79.1 |
| Comparative Example 8 | 1.053 | 0.934 | 88.7 |

Referring to Table 2, it may be confirmed that the initial discharge capacities, final discharge capacities after high temperature (60°C) storage, and capacity retentions of the lithium secondary batteries according to Examples 1 to 8 were all improved in comparison to those of the lithium secondary batteries according to Comparative Examples 1, 2, and 5 to 8.

**2. Experimental Example 2: Resistance Increase Rate Evaluation**

In order to evaluate resistances of the lithium secondary batteries prepared according to Examples 1 to 8 and

Comparative Examples 1 to 8, after the lithium secondary batteries were activated, initial resistances when the lithium secondary batteries were charged to a state of charge (SOC) of 50% were measured. Thereafter, each lithium secondary battery, in a state in which each lithium secondary battery was charged at 0.33 C/4.25 V to 4.25 V/0.05 C mA under a constant current/constant voltage (CC/CV) condition at room temperature, charged to a state of charge (SOC) of 100%, and then stored at a high temperature (60°C) for 28 days, was adjusted to a SOC of 50% at room temperature and resistance was measured. The resistance was defined as final resistance. Resistance increase rates (%), which were calculated by substituting the initial resistance and the final resistance into Equation 2 below, are presented in Table 3 below.

[Equation 2]

$$\text{Resistance increase rate (\%)} = \{(\text{final resistance} - \text{initial resistance})/\text{initial resistance}\}\times 100\ (\%)$$

[Table 3]

| | Resistance increase rate (%) |
|---|---|
| Example 1 | 22.7 |
| Example 2 | 21.6 |
| Example 3 | 20.6 |
| Example 4 | 23.1 |
| Example 5 | 23.8 |
| Example 6 | 23.6 |
| Example 7 | 19.9 |
| Example 8 | 29.3 |
| Comparative Example 1 | 25.0 |
| Comparative Example 2 | 45.5 |
| Comparative Example 3 | 32.2 |
| Comparative Example 4 | 26.7 |
| Comparative Example 5 | 36.3 |
| Comparative Example 6 | 39.3 |
| Comparative Example 7 | 61.1 |
| Comparative Example 8 | 30.2 |

Referring to Table 3, with respect to the secondary batteries of Comparative Examples 1 to 8, it may be confirmed that the resistance increase rates after high-temperature storage were significantly higher than those of the secondary batteries of Examples 1 to 7.

With respect to the secondary battery of Example 8 in which the concentration of the second lithium salt was higher than that of the first lithium salt, it may be confirmed that the resistance increase rate at high temperature was increased in comparison to those of Examples 1 to 7.

### 3. Experimental Example 3: Thickness Increase Rate Evaluation

The lithium secondary batteries of Examples 1 to 7 and Comparative Examples 1 to 7 were charged at 0.33 C/4.25 V to 4.25 V/0.05 C mA under a constant current/constant voltage (CC/CV) condition at room temperature and discharged at a constant current (CC) of 0.33 C to a voltage of 3 V.

Subsequently, a charge state of each of the lithium secondary batteries was set to a state of charge (SOC) of 100% and a thickness of each lithium secondary battery was then measured. The thickness was defined as an initial

thickness.

Then, after each lithium secondary battery was stored at 60°C for 28 days at a SOC of 20%, a thickness of the lithium secondary battery was measured. The thickness was defined as a final thickness. Thickness increase rates (%) were calculated by substituting measured values of the initial thickness and the final thickness into Equation 3 below and presented in Table 4.

[Equation 3]

$$\text{Thickness increase rate (\%)} = \{(\text{final thickness} - \text{initial thickness})/\text{initial thickness}\}\times 100\ (\%)$$

[Table 4]

| | Thickness increase rate (%) |
|---|---|
| Example 1 | 5.5 |
| Example 2 | 5.1 |
| Example 3 | 5.2 |
| Example 4 | 5.5 |
| Example 5 | 5.4 |
| Example 6 | 4.9 |
| Example 7 | 4.8 |
| Comparative Example 1 | 5.2 |
| Comparative Example 2 | 7.6 |
| Comparative Example 3 | 6.0 |
| Comparative Example 4 | 6.6 |
| Comparative Example 5 | 5.5 |
| Comparative Example 6 | 5.6 |
| Comparative Example 7 | 10.5 |

Referring to Table 4, with respect to the lithium secondary batteries of Examples 1 to 7, it may be understood that the thickness increase rates were lower than those of the lithium secondary batteries of Comparative Examples 2, 3, 4, and 7.

The thickness increase rates of the lithium secondary batteries of Examples 1 to 7 were similar levels to those of the lithium secondary batteries of Comparative Examples 1, 5, and 6, but it may be confirmed that the capacity retentions and resistance increase rates after high-temperature storage were further improved as measured in Experimental Examples 1 and 2.

## Claims

1. An electrolyte solution for a lithium secondary battery, the electrolyte solution comprising:

a first lithium salt; a second lithium salt; an organic solvent; and
an additive including a compound represented by Formula 1,
wherein the first lithium salt is an imide lithium salt:

[Formula 1]

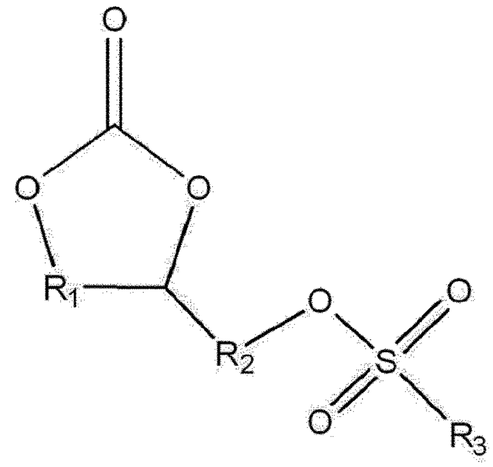

wherein, in Formula 1,

$R_1$ and $R_2$ are each independently an alkylene group having 1 to 6 carbon atoms, and
$R_3$ is selected from the group consisting of hydrogen, a halogen-substituted or unsubstituted alkyl group having 1 to 20 carbon atoms, a cyclic alkyl group having 3 to 8 carbon atoms, an alkenyl group having 2 to 8 carbon atoms, and an aromatic hydrocarbon group having 5 to 14 carbon atoms.

**2.** The electrolyte solution for a lithium secondary battery of claim 1, wherein the compound represented by Formula 1 comprises at least one selected from the group consisting of 1,3-dioxolan-2-onylmethyl allyl sulfonate, 1,3-dioxolan-2-onylmethyl methyl sulfonate, 1,3-dioxolan-2-onylmethyl ethyl sulfonate, 1,3-dioxolan-2-onylmethyl propyl sulfonate, 1,3-dioxolan-2-onylmethyl butyl sulfonate, 1,3-dioxolan-2-onylmethyl pentyl sulfonate, 1,3-dioxolan-2-onylmethyl hexyl sulfonate, 1,3-dioxolan-2-onylmethyl cyclopentyl sulfonate, 1,3-dioxolan-2-onylmethyl cyclohexyl sulfonate, 1,3-dioxolan-2-onylmethyl cycloheptyl sulfonate, 1,3-dioxolan-2-onylmethyl trifluoromethyl sulfonate, 1,3-dioxolan-2-onylmethyl trifluoroethyl sulfonate, 1,3-dioxolan-2-onylmethyl benzyl sulfonate, 1,3-dioxolan-2-onylmethyl phenyl sulfonate, 1,3-dioxolan-2-onylmethyl para-chlorophenyl sulfonate, 1,3-dioxolan-2-onylethyl allyl sulfonate, 1,3-dioxolan-2-onylethyl methyl sulfonate, 1,3-dioxolan-2-onylethyl cyclopentyl sulfonate, 1,3-dioxolan-2-onylethyl cyclohexyl sulfonate, 1,3-dioxolan-2-onylethyl trifluoromethyl sulfonate, 1,3-dioxolan-2-onylethyl trifluoroethyl sulfonate, 1,3-dioxolan-2-onylethyl benzyl sulfonate, 1,3-dioxolan-2-onylethyl phenyl sulfonate, 1,3-dioxolan-2-onylethyl para-chlorophenyl sulfonate, 1,3-dioxan-2-onyl-4-methyl allyl sulfonate, 1,3-dioxan-2-onyl-4-methyl methyl sulfonate, 1,3-dioxan-2-onyl-4-methyl cyclopentyl sulfonate, 1,3-dioxan-2-onyl-4-methyl cyclohexyl sulfonate, 1,3-dioxan-2-onyl-4-methyl trifluoromethyl sulfonate, 1,3-dioxan-2-onyl-4-methyl trifluoroethyl sulfonate, 1,3-dioxan-2-onyl-4-methyl benzyl sulfonate, 1,3-dioxan-2-onyl-4-methyl phenyl sulfonate, and 1,3-dioxan-2-onyl-4-methyl para-chlorophenyl sulfonate.

**3.** The electrolyte solution for a lithium secondary battery of claim 1, wherein a molar ratio of the first lithium salt to the second lithium salt is in a range of 1:1 to 7:1.

**4.** The electrolyte solution for a lithium secondary battery of claim 1, wherein the first lithium salt comprises at least one selected from the group consisting of $LiN(FSO_2)_2$, $LiN(CF_3SO_2)_2$, LiSCN, $LiN(CN)_2$, and $LiN(CF_3CF_2SO_2)_2$.

**5.** The electrolyte solution for a lithium secondary battery of claim 1, wherein the second lithium salt comprises at least one selected from the group consisting of $LiPF_6$, LiF, LiCl, LiBr, LiI, $LiNO_3$, $LiN(CN)_2$, $LiBF_4$, $LiClO_4$, $LiAlO_4$, $LiAlCl_4$, $LiSbF_6$, $LiAsF_6$, $LiBF_2C_2O_4$, $LiBC_4O_8$, $Li(CF_3)_2PF_4$, $Li(CF_3)_3PF_3$, $Li(CF_3)_4PF_2$, $Li(CF_3)_5PF$, $Li(CF_3)_6P$, $LiCF_3SO_3$, $LiC_4F_9SO_3$, $LiCF_3CF_2SO_3$, $LiCF_3CF_2(CF_3)_2CO$, $Li(CF_3SO_2)_2CH$, $LiCF_3(CF_2)_7SO_3$, $LiCF_3CO_2$, $LiCH_3CO_2$, and LiSCN.

**6.** The electrolyte solution for a lithium secondary battery of claim 1, wherein the compound represented by Formula 1 is included in an amount of 0.01 part by weight to 5 parts by weight based on 100 parts by weight of the electrolyte solution for a lithium secondary battery.

7. The electrolyte solution for a lithium secondary battery of claim 1, wherein the compound represented by Formula 1 is included in an amount of 0.1 part by weight to 5 parts by weight based on 100 parts by weight of the electrolyte solution for a lithium secondary battery.

8. The electrolyte solution for a lithium secondary battery of claim 1, the organic solvent comprises a linear carbonate-based compound and a cyclic carbonate-based compound.

9. The electrolyte solution for a lithium secondary battery of claim 8, wherein the cyclic carbonate-based compound and the linear carbonate-based compound are mixed in a volume ratio of 1:9 to 6:4.

10. A lithium secondary battery comprising a positive electrode; a negative electrode; a separator; and the electrolyte solution for a lithium secondary battery of claim 1.

**INTERNATIONAL SEARCH REPORT**

International application No.
**PCT/KR2019/018213**

A. CLASSIFICATION OF SUBJECT MATTER

***H01M 10/0567(2010.01)i, H01M 10/0568(2010.01)i, H01M 10/42(2006.01)i, H01M 10/052(2010.01)i***

According to International Patent Classification (IPC) or to both national classification and IPC

B. FIELDS SEARCHED

Minimum documentation searched (classification system followed by classification symbols)
H01M 10/0567; C07F 9/655; H01G 11/58; H01G 11/64; H01M 10/05; H01M 10/0566; H01M 10/0569; H01M 10/44; H01M 4/13; H01M 6/16; H01M 10/0568; H01M 10/42; H01M 10/052

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal), STN (Registry, Caplus), Google & Keywords: electrolyte, additive, imide, lithium salt, LiN(FSO2)2, LiN(CF3SO2)2, LiN(CF3CF2SO2)2, sulfonate

C. DOCUMENTS CONSIDERED TO BE RELEVANT

| Category* | Citation of document, with indication, where appropriate, of the relevant passages | Relevant to claim No. |
|---|---|---|
| X | KR 10-2009-0030237 A (LG CHEM, LTD.) 24 March 2009<br>See claims 1-20; paragraphs [32], [50] [53], [71]. | 1-10 |
| X | JP 2017-147130 A (UBE IND. LTD.) 24 August 2017<br>See claims 1-3; paragraphs [0130], [0131]. | 1-10 |
| Y | KR 10-2008-0026522 A (LG CHEM, LTD.) 25 March 2008<br>See claims 1-13. | 1-10 |
| Y | JP 2017-021949 A (TOYOTA CENTRAL R&D LABS INC.) 26 January 2017<br>See claims 1-5. | 1-10 |
| Y | KR 10-2014-0066645 A (LG CHEM, LTD.) 02 June 2014<br>See claims 1-19. | 1-10 |
| Y | KR 10-2015-0139847 A (UBE INDUSTRIES, LTD.) 14 December 2015<br>See claims 1-20; paragraph [0551]. | 1-10 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 02 APRIL 2020 (02.04.2020) | **02 APRIL 2020 (02.04.2020)** |

Name and mailing address of the ISA/KR
Korean Intellectual Property Office
Government Complex Daejeon Building 4, 189, Cheongsa-ro, Seo-gu, Daejeon, 35208, Republic of Korea
Facsimile No. +82-42-481-8578

Authorized officer

Telephone No.

Form PCT/ISA/210 (second sheet) (January 2015)

INTERNATIONAL SEARCH REPORT
Information on patent family members

International application No.
PCT/KR2019/018213

| Patent document cited in search report | Publication date | Patent family member | Publication date |
|---|---|---|---|
| KR 10-2009-0030237 A | 24/03/2009 | CN 101803101 A | 11/08/2010 |
| | | CN 101803101 B | 09/01/2013 |
| | | EP 2206189 A1 | 14/07/2010 |
| | | EP 2206189 A4 | 14/12/2011 |
| | | EP 2206189 B1 | 22/10/2014 |
| | | JP 2010-539670 A | 16/12/2010 |
| | | JP 5350385 B2 | 27/11/2013 |
| | | KR 10-1205375 B1 | 28/11/2012 |
| | | US 2010-0266905 A1 | 21/10/2010 |
| | | WO 2009-038358 A1 | 26/03/2009 |
| JP 2017-147130 A | 24/08/2017 | None | |
| KR 10-2008-0026522 A | 25/03/2008 | CN 101517813 A | 26/08/2009 |
| | | CN 101517813 B | 25/05/2011 |
| | | JP 2010-503974 A | 04/02/2010 |
| | | JP 5604105 B2 | 08/10/2014 |
| | | KR 10-0867535 B1 | 06/11/2008 |
| | | TW 200827324 A | 01/07/2008 |
| | | TW I382010 B | 11/01/2013 |
| | | US 2009-0280414 A1 | 12/11/2009 |
| | | US 8349502 B2 | 08/01/2013 |
| | | WO 2008-035928 A1 | 27/03/2008 |
| JP 2017-021949 A | 26/01/2017 | None | |
| KR 10-2014-0066645 A | 02/06/2014 | KR 10-2015-0102916 A | 09/09/2015 |
| | | US 2015-0249269 A1 | 03/09/2015 |
| | | WO 2014-081240 A1 | 30/05/2014 |
| KR 10-2015-0139847 A | 14/12/2015 | CN 105074996 A | 18/11/2015 |
| | | CN 105074996 B | 03/10/2017 |
| | | EP 2983233 A1 | 10/02/2016 |
| | | EP 2983233 A4 | 12/10/2016 |
| | | EP 2983233 B1 | 06/03/2019 |
| | | JP 2015-159120 A | 03/09/2015 |
| | | JP 5729525 B2 | 03/06/2015 |
| | | JP 6372414 B2 | 15/08/2018 |
| | | US 2016-0027592 A1 | 28/01/2016 |
| | | US 9934911 B2 | 03/04/2018 |
| | | WO 2014-163055 A1 | 09/10/2014 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 20180169582
- KR 20190170678
- JP 2003007331 A